Europäisches Patentamt

European Patent Office

Office européen des brevets

(11) Publication number: **0 108 507**
**B1**

(12) **EUROPEAN PATENT SPECIFICATION**

(45) Date of publication of patent specification: **13.08.86**

(21) Application number: **83306088.2**

(22) Date of filing: **07.10.83**

(51) Int. Cl.⁴: **B 60 K 17/08, B 60 K 41/22,
F 16 H 9/12**

(54) **Control system for an infinitely variable transmission having an electromagnetic powder clutch.**

(30) Priority: **09.10.82 JP 178022/82**

(43) Date of publication of application:
**16.05.84 Bulletin 84/20**

(45) Publication of the grant of the patent:
**13.08.86 Bulletin 86/33**

(84) Designated Contracting States:
**AT CH DE FR GB IT LI NL SE**

(56) References cited:
**EP-A-0 011 342
DE-A-2 928 191
DE-B-1 155 680
US-A-4 152 947**

(73) Proprietor: **FUJI JUKOGYO KABUSHIKI KAISHA
7-2 Nishishinjuku 1-chome Shinjuku-ku
Tokyo (JP)**
(73) Proprietor: **Van Doorne's Transmissie B.V.
Dr. Hub van Doorneweg 120 Postbus 500
NL-5026 RA Tilburg (NL)**

(72) Inventor: **Takano, Toshio
1-3-2 Sakaecho Hamuramachi
Nishitama-gun Tokyo (JP)**

(74) Representative: **Kirk, Geoffrey Thomas et al
BATCHELLOR, KIRK & EYLES 2 Pear Tree Court
Farringdon Road
London EC1R 0DS (GB)**

Courier Press, Leamington Spa, England.

## Description

The present invention relates to a system for controlling an automatic transmission for a vehicle having an infinitely variable belt-drive transmission comprising a driving pulley, a driven pulley and a driving belt coupling the pulleys, the transmission ratio being automatically varied by changing the effective diameters of both the pulleys, the control system includes a clutch for connecting the vehicle to the input of the transmission mechanism. A control system having these features is described, for example in DE—A—2928191 or JP—A—55—63051.

In Japanese laid-open patent specification No. 55—63051, an infinitely variable belt-drive transmission associated with a centrifugal clutch is disclosed as an automatic transmission system for a vehicle. Further, JP—A—55—65755 and US—A—4,152,947 disclose an infinitely variable belt-drive transmission, the transmission ratio of which is automatically varied in accordance with the driving condition of the vehicle.

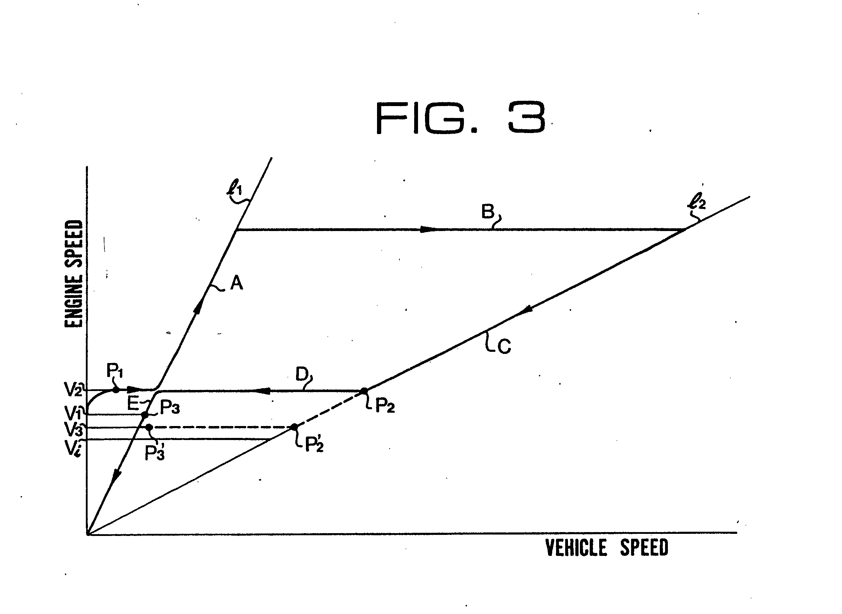

Figure 3 shows the relationships between vehicle speed and engine speed of a vehicle provided with such an automatic transmission. As seen from the Figure 3, the centrifugal clutch begins to engage when the engine speed reaches a speed $V_1$ which is a little higher than an idling speed Vi, and the clutch engages entirely at a point $P_1$ when the engine speed reaches a predetermined higher speed $V_2$. At that time, the vehicle is driven at the maximum transmission ratio of the transmission and both the engine speed and the vehicle speed increase as the accelerator pedal is depressed. Since the transmission ratio is kept at the maximum transmission ratio of the infinitely variable transmission, the engine speed and vehicle speed increase along a straight line $l_1$ as shown by line A. When the relationship between the degree of depression of the accelerator pedal and the engine speed reaches a proper condition, the transmission ratio starts to decrease. Accordingly, the line A representing the engine speed and vehicle speed on the line $l_1$ changes to a horizontal line B. After the transmission ratio has reached its minimum value, the engine speed and vehicle speed change along a line $l_2$.

Upon decelerating with the transmission ratio at its minimum value, the values of both the engine speed and the vehicle speed descend along the line $l_2$ as shown by line C. Further, when the engine speed decreases to a point $P_2$, corresponding to the engine speed $V_2$ which is as small as possible consistent with maintaining the centrifugal clutch in engagement, the transmission ratio continuously increases, causing the vehicle speed to decrease as shown by line D (this region is called "shiftdown" in the specification). After maximum transmission ratio is achieved and the vehicle speed reaches line $l_1$, both the engine speed and the vehicle speed decrease along line $l_1$ as line E. When the engine speed decreases to the speed $V_1$, the clutch is disengaged at point $P_3$.

Thus, the engine speed $P_2$ for the shiftdown excursion D is chosen to have a value approximate to the speed $V_2$, so as to keep the centrifugal clutch in engaging state, and thus depends on the characteristics of the centrifugal clutch. If the engine speed $P_2$ at shiftdown is set to a value lower than the speed $V_2$, the clutch slips when accelerating the vehicle during the shiftdown excursion, causing problems, such as overheating or breakdown of the clutch.

In order to prevent such clutch slip, the engine speed $P_2$ at shiftdown must be set to a higher value. As a result, fuel consumption of the engine inevitably increases. Further, since the transmission ratio reaches the maximum value on the line $l_1$ at a considerable engine speed, the vehicle is subjected to a drastic engine braking effect, to the detriment of the vehicle driveability and the comfort of the passengers.

Therefore, the present invention seeks to overcome problems otherwise arising during the shiftdown operation of an infinitely variable belt-drive automatic transmission, and further to improve the capacity of the automatic transmission .

For this purpose, in place of the centrifugal clutch, the system of the present invention employs an electromagnetic clutch in combination with a control circuit for controlling the engagement and disengagement of the clutch.

Thus, the invention is characterised in having an electromagnetic clutch which has a coil for varying the engagement and disengagement of the clutch by adjustment of the clutch current through the coil and a control circuit for the clutch comprising first circuit means for generating an engine speed signal, second circuit means for generating a vehicle speed signal, and an arithmetic circuit for controlling the clutch current in dependence on the engine speed signal and the vehicle speed signal, the arithmetic circuit being so arranged to cut off the clutch current when the engine speed decreases to a predetermined value which is slightly higher than the engine stalling speed.

The present invention will be more apparent by way of example from the following description of one embodiment of a control system in accordance therewith, reference being made to the accompanying drawings, in which

Figure 1 is a schematic illustration of an infinitely variable belt-drive transmission;

Figure 2 is a block diagram showing a control system of the clutch; and

Figure 3 is a graph showing the relationships between engine speed and vehicle speed of a vehicle provided with a conventional transmission and a vehicle with the transmission and control system of Figures 1 and 2.

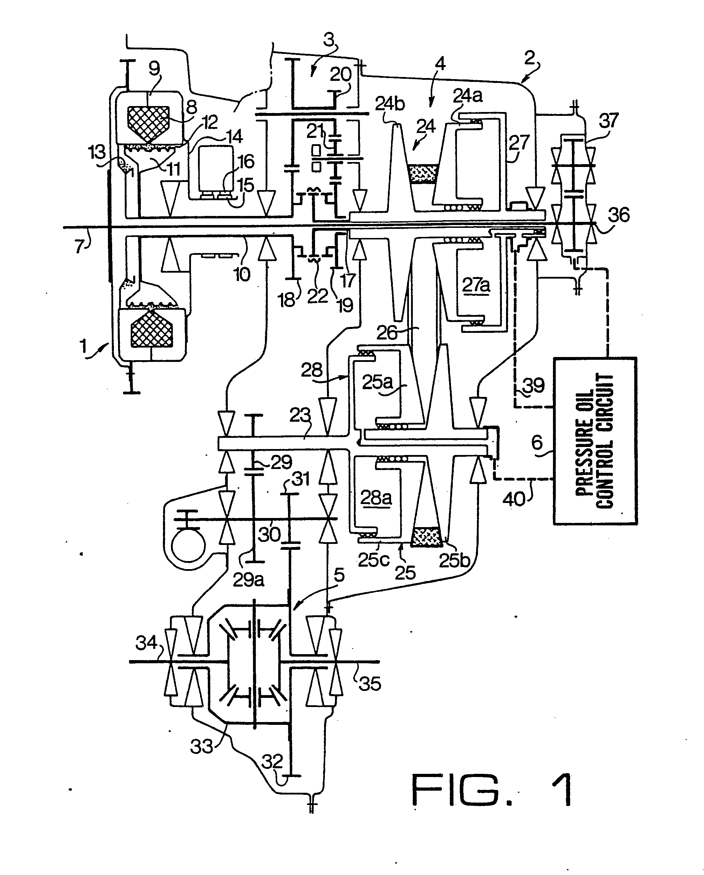

The infinitely variable belt-drive automatic transmission comprises, as shown in Figure 1, an electromagnetic powder clutch 1, an infinitely variable belt-drive transmission 2, a reversing mechanism 3, pulleys and belt device 4, differential 5, and pressure oil control circuit 6. The crankshaft 7 of an engine (not shown) is connected to an annular drive member 9 of the electromagnetic powder clutch 1. The electromagnetic powder clutch comprises a coil 8 provided in the drive member 9, a driven member 11 having its outer periphery spaced from the inner periphery of the drive member 9 by a gap 12, and a powder chamber 13 defined between the drive member 9 and driven member 11. The powder chamber 13 is filled with powder of magnetic material. The driven member 11 is secured to an input shaft 10 of the belt-drive transmission. A holder 14 secured to the drive member 9 carries slip rings 15 which are electrically connected to the coil 8. The coil 8 is supplied through brushes 16 and slip rings 15 with control current from a control circuit to be described subsequently.

When the magnetizing coil 8 is excited by clutch current, drive member 9 is magnetized to produce a magnetic flux passing through the driven member 11. The magnetic powder is aggregated in the gap 12 by the magnetic flux and the driven member 11 is engaged with the drive member 9 by the powder. On the other hand, when the clutch current is cut off, the drive and driven members 9 and 11 are disengaged from one another.

In the infinitely variable transmission 2, the reversing mechanism 3 is provided between the input shaft 10 and a main shaft 17 of the infinitely variable transmission 2. The main shaft 17 is cylindrical and is disposed coaxially with the input shaft 10. The reversing mechanism 3 comprises a drive gear 18 integral with input shaft 10 and a driven gear 19 rotatably mounted on the main shaft 17 for reverse drive. Gear 18 is engaged with gear 19 through a counter gear 20 and an idler gear 21. An axially movable dog clutch 22 is splined on the main shaft 17; by shifting the dog clutch 22 from the neutral position shown and engaging it with gear 18, the main shaft 17 is coupled directly with the input shaft 10 to establish forward drive in the D range, while by shifting the clutch 22 in the opposite direction and engaging it with gear 19, the direction of rotation of the main shaft 17 is reversed by gears 18 to 21 to establish rearward driving.

Main shaft 17 has an axial passage in which is mounted an oil pump driving shaft 36 connected to crankshaft 7. An axially fixed conical disc 24b is secured to main shaft 17 and an axially movable conical disc 24a is axially slidably mounted on the main shaft; discs 24a and 24b together form a driving pulley 24. The movable conical disc 24a also slides in a cylinder 27 secured to the main shaft 17 to form therewith a cylinder chamber 27a acting as a pressure oil servo device, with the movable conical disc 24a acting as a piston in the cylinder chamber 27a. Chamber 27a communicates with a gear pump 37 through a passage 39 and the pressure oil control circuit 6. The gear pump 37 is driven by the shaft 36.

An output shaft 23 is disposed in parallel with the main shaft 17. A fixed conical disc 25b is formed on the output shaft 23 opposite the movable disc 24a and a movable conical disc 25a is slidably mounted on the shaft 23 opposite disc 24b. Movable conical disc 25a has a cylindrical portion 25c in which a piston 28 secured to the output shaft 23 is slidably engaged. A chamber 28a defined by the movable conical disc 25a and piston 28 is communicated with the gear pump 37 through a passage 40 and the pressure oil control circuit 6. A drive belt 26 engages with the driving pulley 24 and the driven pulley 25.

Secured to the output shaft 23 is a drive gear 29 which engages with a gear 29a on an intermediate shaft 30. An output gear 31 secured to shaft 30 engages with a final reduction gear 32. Rotation of the final reduction gear 32 is transmitted to axles 34 and 35 of the vehicle driving wheels through a differential 33.

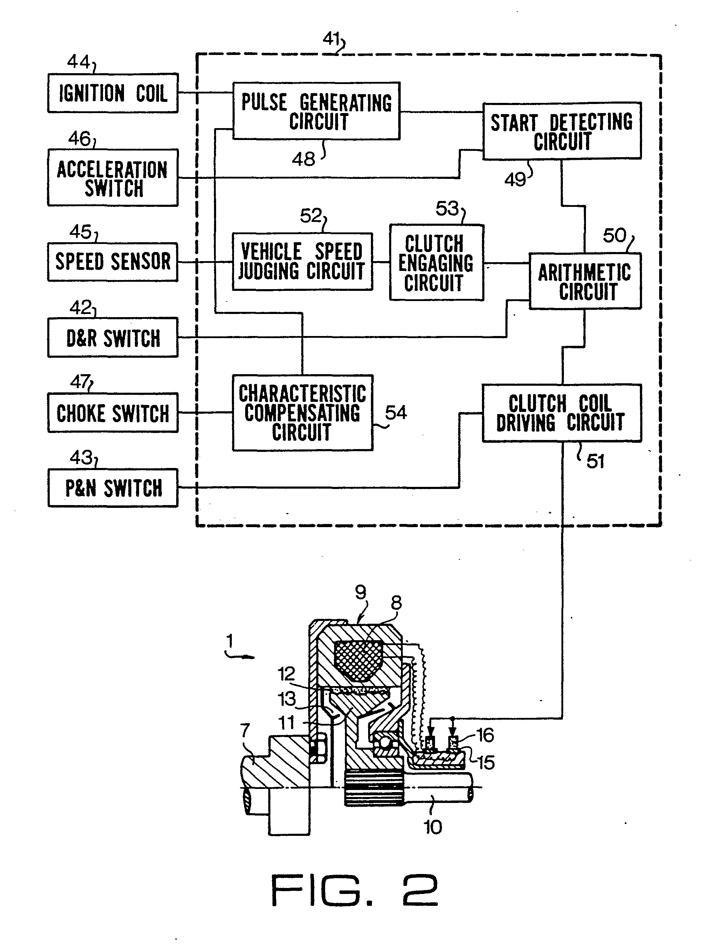

Referring to Figure 2, an electric control circuit 41 for the clutch 1 is supplied with various input signals: selector lever signals indicating the position of a drive selector lever (not shown) from a D&R switch 42 and a P&N switch 43; an ignition pulse signal from the engine ignition coil 44; a vehicle speed signal from a speed sensor 45; an accelerator pedal position signal indicating the depression of the accelerator pedal from an acceleration switch 46; and a choke signal indicating the operation of the choke from a choke switch 47.

The D&R switch 42 is closed when the selector lever is shifted to either the drive position or the reverse position, and the P&N switch 43 is closed when the selector lever is shifted to the parking position or the neutral position. The ignition pulse signal from the ignition coil 44 is shaped to a suitable waveform and applied to a pulse generating circuit 48 which produces pulses at a rate proportional to the engine speed. The output pulses from the pulse generating circuit 48 and the signal from the acceleration switch 46 are applied to a start detecting circuit 49 which detects starting of the vehicle and delivers a signal to arithmetic circuit 50. The arithmetic circuit 50 produces an output signal having a predetermined characteristic dependent on the signals from the circuit 49 and D&R switch 42. Provided that the D&R switch 42 is closed, the output signal from circuit 50 is fed to a clutch coil driving circuit 51 which supplies a clutch current to the coil 8. The clutch is thus engaged to start the vehicle ($V_1$—$V_2$ in Figure 3). Further, the speed signal from vehicle speed sensor 45 is applied to the arithmetic circuit 50 through a vehicle speed judging circuit 52 and a clutch engaging circuit 53, so that, when the vehicle speed reaches a predetermined value after the starting of the vehicle, the arithmetic circuit 50 delivers a signal to the driving circuit 51 causing a steady clutch current to be maintained and the clutch to be kept engaged, regardless of the absence of a signal from acceleration switch 46. This condition is kept also at low engine speed as long as the engine does not stall. The signal from choke switch 47 is applied to the pulse generating circuit 48 through a characteristic compensating circuit 54 which produces a signal for gradually raising the level of the clutch current at high idling engine speed. The signal from the P&N switch 43 is fed to the clutch coil driving circuit 51 to cut off the clutch current when the selector lever is in either the park (P) position of the neutral (N) position.

In operation, when the selector lever is moved to the drive (D) position or the reverse (R) position to start the vehicle, clutch 22 of the infinitely variable transmission 2 is appropriately engaged. As the engine speed is increased by depression of the accelerator pedal, clutch current flows dependent on the output signal of the arithmetic circuit 50, so that the electromagnetic powder clutch 1 is smoothly engaged according to characteristic as shown by the line $V_1$—$P_1$ in Figure 3. Thereafter, the vehicle speed increases with engine speed according to line $I_1$. During increase in engine speed along line $I_1$, pressure oil is supplied to chamber 28a of driven pulley 25, so that the transmission ratio is at a maximum ratio. When a predetermined vehicle driving condition is reached, pressure oil is supplied to chamber 27a of driving pulley 24. The effective area of chamber 27a is larger than that of chamber 28a, and therefore the transmission ratio decreases progressively according to the increase in vehicle speed (line B in Figure 3). When the transmission ratio reaches the minimum value, vehicle speed changes with engine speed according to line $I_2$, the transmission ratio then remaining constant. When the vehicle is decelerated at the minimum transmission ratio, both the engine speed and the vehicle speed decrease maintaining the minimum transmission ratio.

Whereas a centrifugal clutch engages and disengages at approximately the same fixed engine speed ($V_2$ in Figure 3), an electromagnetic powder clutch can be electrically controlled to engage and disengage at selected engine speeds which may differ from one another. The electromagnetic powder clutch in the present case is held in engagement until the engine speed has fallen to a very low speed $V_3$ whhich is slightly higher than the stalling speed of the engine and which is less than the speed at which the clutch is engaged on start up. This control is performed by the arithmetic circuit 50 in dependency on signals from the ignition coil 44 and vehicle speed sensor 45. When the engine speed falls to the value $V_3$ at $P_2'$ as indicated by the broken line, the transmission ratio is progressively increased the shiftdown having been set appropriately, and, through the braking action of the engine, the vehicle speed falls, the clutch being disengaged at the point $P_3'$ at which the transmission ratio is maximum.

When the selector lever is shifted to the parking position or neutral position, the signal from the P&N switch 43 actuates the clutch coil driving circuit 51 to cut off the clutch current and to disengage the electromagnetic powder clutch 1. Accordingly, the clutch 1 is held disengaged even when the engine speed is high, for example during choke operation. When the selector lever is shifted to the drive position, the characteristic compensating circuit 54 operates dependent on the signal from the choke switch 47 so as to engage the clutch smoothly to start the vehicle.

As apparent from the above explanation, the electromagnetic powder clutch 1 in combination with the infinitely variable belt-drive transmission 2 is completely disengaged in the P or N range by control of the clutch current, and the various problems arising from the use of a centrifugal clutch at high idling engine speeds are avoided. Further, because disengagement of the electromagnetic powder clutch 1 is not dependent only on engine speed, but can be effected by control of the clutch current, the shiftdown starting point $P_2'$ can be decreased as low as possible. Although the point $P_3'$ is illustrated adjacent to the line $I_1$ in Figure 3, shock resulting from heavy vehicle deceleration may be eliminated by positioning the point $P_3'$ closer to the line $I_2$. Consequently, there are many advantages, such as a large driving range at a low transmission ratio, improved fuel consumption, and low noise.

While the presently preferred embodiment of the present invention has been shown and described, it is to be understood that this disclosure is for the purpose of illustration and that various changes and modifications may be made without departing from the spirit and scope of the invention as set forth in the appended claims.

## Claims

1. A control system for controlling a vehicle transmission which includes an infinitely variable transmission mechanism (2) comprising a driving pulley (24), a driven pulley (25) and a driving belt (26) coupling the pulleys, the transmission ratio being automatically varied by changing the effective diameters of both the pulleys (24 and 25), the control system comprising a clutch for connecting the vehicle engine to the input of the transmission mechanism (2); characterised in that the clutch is an electromagnetic clutch (1) which has a coil (8) for varying the engagement and disengagement of the clutch by adjustment of the clutch current through the coil (8) and a control circuit (41) for the clutch (1) comprising first circuit means (44, 48) for generating an engine speed signal, second circuit means (42, 52, 53) for generating a vehicle speed signal, and an arithmetic circuit (50) for controlling the clutch current in dependence on the engine speed signal and the vehicle speed signal, the arithmetic circuit (50) being so arranged to cut off the clutch current when the engine speed decreases to a predetermined value (V3) which is slightly higher than the engine stalling speed.

2. A vehicle transmission comprising: an infinitely variable transmission mechanism (2) comprising a driving pulley (24), a driven pulley (25) and a driving belt (26) coupling the pulleys, the transmission ratio being automatically varied by changing the effective diameters of both the pulleys (24 and 25) and a clutch for connecting the vehicle engine to the input of the transmission mechanism (2); characterised by a control system as claimed in claim 1.

3. A control system according to claim 1, in which the electromagnetic clutch (1) is an electromagnetic powder clutch.

4. A control system according to claim 1 or claim 3, in which the control circuit (41) is arranged during acceleration to supply a clutch engaging current to the coil (8) at an engine speed which is higher than the predetermined value (V3).

5. A control system according to claim 4, in which the arithmetic circuit (50) further receives an acceleration signal when the accelerator is depressed and is arranged to supply the clutch engaging current at the higher engine speed while the acceleration signal is received.

6. A control system according to claim 4, in which the arithmetic circuit (50) is arranged to supply the clutch engaging current when the vehicle speed is greater than a given value ($P_2'$) and the acceleration signal is no longer received.

7. A control system according to any one of the preceding claims 1 and 3 to 6, in which the clutch current is cut off during shiftdown operation of the transmission mechanism (2).

**Patentansprüche**

1. Steuervorrichtung zum Steuern der Kraftübertragung in Fahrzeugen, mit einem stufenlos veränderbaren Getriebe (2), mit einer Antriebsscheibe (24), einer Gegenscheibe (25) und einem Transmissionsriemen (26), der die Scheiben koppelt, wobei das Untersetzungsverhältnis automatisch durch Wechsel des effektiven Durchmessers beider Scheiben (24 und 25) verändert wird und eine Kupplung für die Verbindung des Fahrzeugmotors mit dem Eingang des Getriebes (2) vorgesehen ist; dadurch gekennzeichnet, daß die Kupplung (1) elektromagnetisch ist und eine Spule (8) zum Verändern des Einkuppelns und Auskuppelnsder Kupplung durch Einstellen des Kupplungsstroms durch die Spule (8) und einen Steuerkreis (41) für die Kupplung besitzt, der einen ersten Schaltkreis (44, 48) für die Erzeugung eines Motorgeschwindigkeitssignals, einen zweiten Schaltkreis (42, 52, 53) für die Erzeugung eines Fahrzeuggeschwindigkeitssignals und einen arithmetischen Schaltkreis (50) für die Steuerung des Kupplungsstroms abhängig vom Motorgeschwindigkeitssignal und vom Fahrzeuggeschwindigkeitssignal aufweist, wobei der arithmetische Schaltkreis (50) den Kupplungsstrom unterbricht, wenn die Motorgeschwindigkeit auf einen vorbestimmten Wert (V3) knapp oberhalb der Mindestgeschwindigkeit des Motors absinkt.

2. Kraftübertragung in Fahrzeugen, mit einem stufenlos veränderbaren Getriebe (2), mit einer Antriebsscheibe (24), einer Gegenscheibe (25) und einem Transmissionsriemen (26), der die Scheiben koppelt, wobei das Untersetzungsverhältnis automatisch durch Wechsel des effektiven Durchmessers beider Scheiben (24 und 25) verändert wird und eine Kupplung für die Verbindung des Fahrzeugmotors mit dem Eingang des Getriebes (2) vorgesehen ist, gekennzeichnet durch eine Steuervorrichtung nach Anspruch 1.

3. Steuervorrichtung nach Anspruch 1, dadurch gekennzeichnet, daß die elektromagnetische Kupplung (1) eine Elektromagnetpulverkupplung ist.

4. Steuervorrichtung nach Anspruch 1 oder 3, dadurch gekennzeichnet, daß der Steuerkreis (41) während eines Beschleunigungsvorganges der Spule (8) einen die Kupplung einkuppelnden Strom zuführt, wenn die Motorgeschwindigkeit höher ist als der vorbestimmte Wert (V3).

5. Steuervorrichtung nach Anspruch 4, dadurch gekennzeichnet, daß der arithmetische Schaltkreis (50) außerdem ein Beschleunigungssignal erhält, wenn das Gaspedal niedergedrückt ist, und daß er bei der höheren Motorgeschwindigkeit, so lange das Beschleunigungssignal empfangen wird, die Kupplung mit dem einkuppelnden Strom versorgt.

6. Steuervorrichtung nach Anspruch 4, dadurch gekennzeichnet, daß der arithmetische Schaltkreis (50) die Kupplung mit dem einkuppelnden Strom versorgt, wenn die Fahrzeuggeschwindigkeit größer ist als ein vorgegebener Wert ($P_2$,) und das Beschleunigungssignal nicht empfangen wird.

7. Steuervorrichtung nach einem der vorstehenden Ansprüche 1 oder 3 bis 6, dadurch gekennzeichnet, daß während des Herunterschaltens des Getriebes (2) der Kupplungsstrom abgeschaltet ist.

**Revendications**

1. Dispositif de commande pour une transmission de véhicule équipé d'un mécanisme de transmission à variation continue (2) comprenant une poulie motrice ou menante (24), une poulie menée (25) et une courroie de transmission (26) reliant les poulies, le rapport de transmission étant automatiquement modifié en faisant varier les diamètres effectifs des deux poulies (24, 26), le dispositif de commande comportant un accouplement pour relier le moteur du véhicule à l'entrée du mécanisme de transmission (2), caractérisé en ce que ledit accouplement est un accouplement électromagnétique (1) possédant une bobine (8) pour faire varier le degré d'embrayage et de débrayage de l'accouplement en réglant le courant d'embrayage circulant dans une bobine (8), et un circuit de commande (41) pour l'accouplement (1) qui comprend un premier circuit (44, 48) pour engendrer un signal de vitesse de moteur, un second circuit (42, 52, 53) pour engendrer un signal de vitesse de véhicule et un circuit arithmétique (50) pour régler le courant d'embrayage en fonction du signal de vitesse de moteur et du signal de vitesse de véhicule, le circuit arithmétique (50) étant conçu pour couper le courant d'embrayage quand la vitesse du moteur décroit à une valeur prédéterminée (V3) qui est légèrement supérieure à la vitesse à laquelle le moteur cale.

2. Transmission de véhicule qui comprend un mécanisme de transmission à variation continue (2) comportant une poulie motrice ou menante (24), une poulie menée (25) et une courroie de transmission (26) reliant lesdites poulies, le rapport de transmission étant automatiquement modifié en faisant varier les diamètres effectifs des deux poulies (24, 25); et un accouplement pour relier le moteur du véhicule à l'entrée du mécanisme de transmission (2), caractérisé par un dispositif de commande tel que spécifié dans la revendication 1.

3. Dispositif de commande selon la revendication 1, caractérisé en ce que l'accouplement (1) est un accouplement électromagnétique à poudre.

4. Dispositif de commande selon la revendication 1 ou 3, caractérisé en ce que le circuit de commande (41) est conçu pour fournir, pendant les accélérations, un courant d'embrayage d'accouplement à bobine (8) à une vitesse de moteur qui est supérieure à la valeur prédéterminée (V3).

5. Dispositif de commande selon la revendication 1 ou 4, caractérisé en ce que le circuit arithmétique (50) reçoit aussi un signal d'accélération quand on appuie sur l'accélérateur et est conçu pour fournir le courant d'embrayage de l'accouplement à la vitesse de moteur supérieure pendant la réception du signal d'accélération.

6. Dispositif de commande selon la revendication 4, caractérisé en ce que le circuit arithmétique (50) est conçu pour fournir le courant d'embrayage de l'accouplement quand la vitesse du véhicule est supérieure à une valeur donnée ($P_2'$) alors que le signal d'accélération n'est plus reçu.

7. Dispositif de commande selon l'une quelconque des revendications précédentes 1 et 3 à 6, caractérisé en ce que le courant d'embrayage est coupé pendant les phases de rétrogradation du mécanisme de transmission (2).

# FIG. 1

PRESSURE OIL CONTROL CIRCUIT

FIG. 2

# FIG. 3